# EUROPEAN PATENT APPLICATION

(11) **EP 3 647 278 A1**
(43) Date of publication of application: **06.05.2020**
(21) Application number: 18248275.2
(22) Date of filing: 28.12.2018
(51) Int. Cl.: C02F 3/34, C02F 103/14, C02F 103/30

(54) **A MICROBIAL CONSORTIUM FOR DEGRADATION OF DYES IN WASTEWATER, METHODS AND USES THEREOF**

(30) Priority: 29.10.2018 PT 2018115114
(71) Applicant: AQUITEX ACABAMENTOS QUÍMICOS TÊXTEIS, SA, 4425-626 Maia (PT); UNIVERSIDADE CATOLICA PORTUGUESA, 4200-072 Porto (PT)
(72) Inventor: ESTEVEZ PINTADO, Maria Manuela, 4200-374 Porto (PT); LIMA E CASTRO, Paula Maria, 4200-374 PORTO (PT); CANAZA JORGES, Alejandro, 4200-374 PORTO (PT); ABREU FARIA, Jorge João, 4425-626 MAIA (PT); FERNANDES DE MELO MOREIRA DA COSTA, Patrícia Raquel, 4169-005 PORTO (PT); DE ALMEIDA MENDES, Marta Sofia, 4200-374 PORTO (PT); SILVA, Ana Rita, 4200-374 Porto (PT)
(74) Representative: Patentree

(57) **Abstract**

The present subject-matter provides a microbial consortium for improving the synthetic dye degradation efficiency of effluent treatment plants in wastewater, in particular wastewater generated from textile industries, printing industries or other dye wastewater industries and a method thereof.

The consortium comprises either a sole microorganism or a synergistic combination of selective microorganisms to develop a consortium enabling for effective degradation of synthetic dyes present in wastewater and converting thereof into harmless and environment friendly substances. The invention also provides for the said microorganisms and their isolations.

## Description

### TECHNICAL FIELD

The present subject-matter provides a microbial consortium for improving the synthetic dyes degradation efficiency of effluent treatment plants in wastewater, in particular wastewater generated from textile industries, printing industries or other dye wastewater industries and a method thereof.

The consortium comprises either a sole microorganism or a synergistic combination of selected microorganisms to develop a consortium enabling for effective degradation of synthetic dyes present in wastewater and converting thereof into more environment friendly substances. The invention also provides for the said microorganisms and their isolations.

### BACKGROUND

Synthetic dyes are compounds that have been extensively used for textile dyeing and paper printing, as well as additives in petroleum, pharmaceutical and cosmetic products. However, owing to their aromatic and heterocyclic moieties, synthetic dyes are often highly recalcitrant, and some are even toxic and mutagenic. Because of their resistance to degradation, dyes can cause considerable environmental pollution, so their removal has received considerable attention.

Many microorganisms have been found to be capable of degrading dyes; these include bacteria, filamentous fungi, yeasts, actinomycetes and algae.

White rot fungi, in particular, are able to transform (and mineralize) some dyes, based on their extracellular, non-specific and non-stereoselective enzyme systems. Involvement of ligninolytic peroxidases (viz. Versatile, MnP and LiP), besides laccases, has been demonstrated in the degradation pathways of some of those dyes. However, filamentous fungi are poorly adapted to a continuous wastewater treatment unit, due to their low rates of growth, coupled with a filamentous exuberant mycelium. Yeasts possess the advantage of growing faster than filamentous fungi and can in addition resist to unfavourable environments. However, degradation of synthetic dyes by yeasts has not been extensively reported to date.

These facts are disclosed in order to illustrate the technical problem addressed by the present disclosure.

### BRIEF DESCRIPTION OF THE DRAWINGS

The following figures provide preferred embodiments for illustrating the disclosure and should not be seen as limiting the scope of invention.

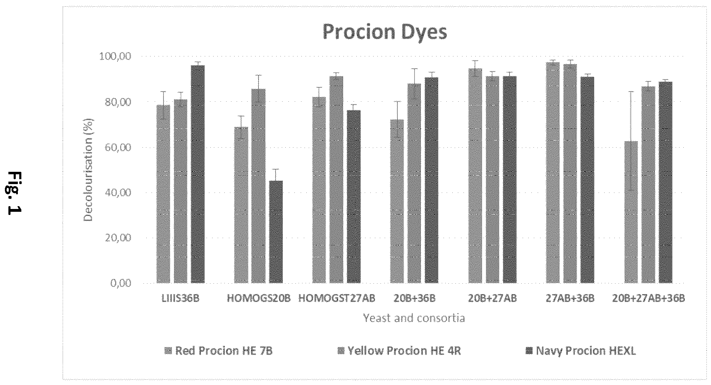

Figure 1: The decolourisation parameter for each Procion dye was observed for all the individual strains and also for the combination of them. The decolourisation of this type of dyes was quite high, mostly above 60%. At the individual level, strain *Candida pseudoglaebosa* LIIIS36B and strain *Yarrowia lipolytica* HOMOGST27AB had better results than strain *Candida parapsilosis* HOMOGS20B. When in consortium, strain HOMOGST27AB in consortium with strain LIIIS36B as well as strains HOMOGS20B + HOMOGST27AB achieved a higher percentage of decolourisation than the other consortia.

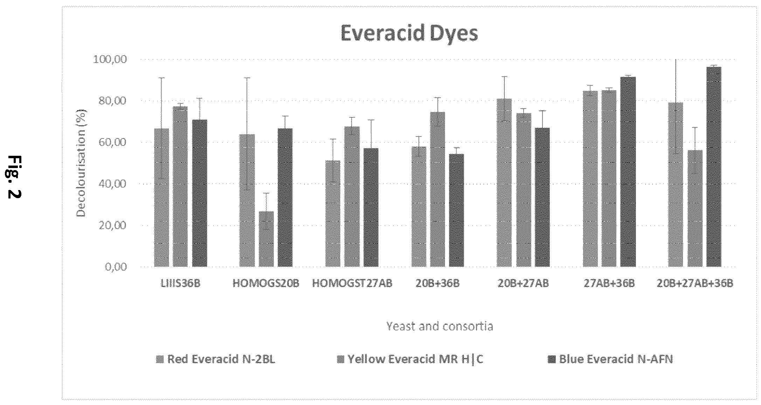

Figure 2: The decolourisation parameter for each Everacid dye was observed for all the individual strains and also for the combination of them. The decolourisation of this type of dyes was high, mostly above 50%. At the individual level, strain *Candida pseudoglaebosa* LIIIS36B could remove most of the colour of these dyes. In consortium, strain *Yarrowia lipolytica* HOMOGST27AB together with strain *Candida pseudoglaebosa* LIIIS36B showed the better results.

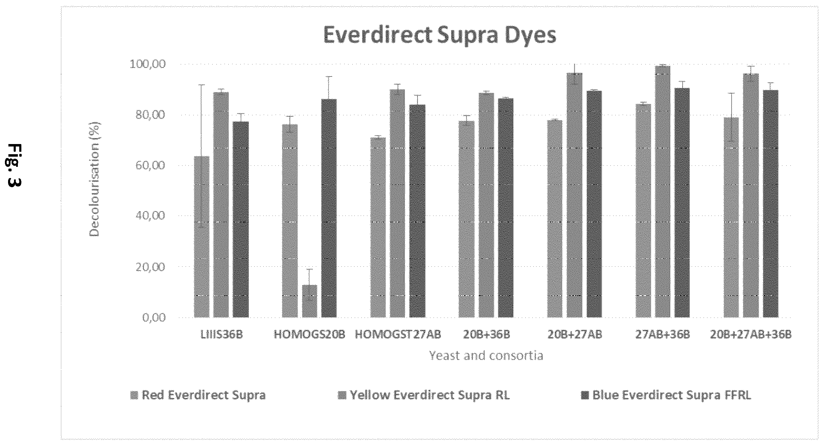

Figure 3: The decolourisation parameter for each Everdirect Supra dye was observed for all the individual strains and also for the combination of them. The decolourisation of this type of dyes was high, mostly above 60%. At the individual level, strain *Yarrowia lipolytica* HOMOGST27AB appears to be the best-performing strain for this type of dyes. In consortium, combination of strain *Yarrowia lipolytica* HOMOGST27AB together with strain *Candida pseudoglaebosa* LIIIS36B obtained a higher percentage of decolourisation.

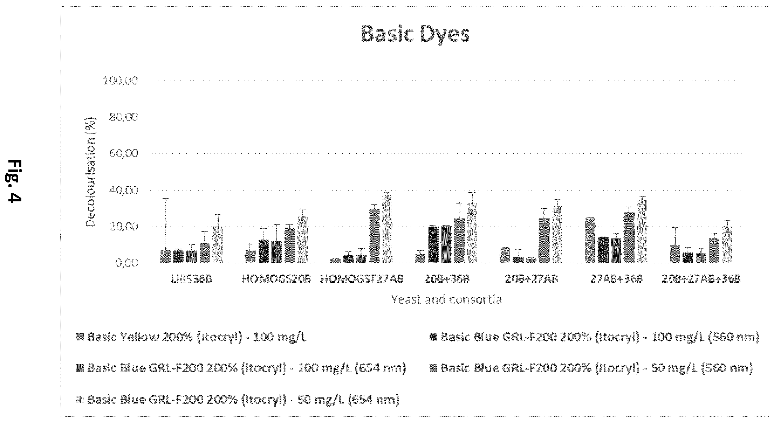

Figure 4: The decolourisation parameter for each Basic dye was observed for all the individual strains and also for the combination of them. The decolourisation of this type of dyes was much lower when compared to the other types of dyes, not reaching 40% of decolourisation, especially regarding Basic Yellow 200% (Itocryl). However, in individual terms, strain *Yarrowia lipolytica* HOMOGST27AB obtained better results with Basic Blue GRL-F 200% (Itocryl), when comparing with the other strains. In consortium, combination of the strain *Yarrowia lipolytica* HOMOGST27AB with strain *Candida pseudoglaebosa* LIIIS36B obtained a higher percentage of decolourisation.

### GENERAL DESCRIPTION

The present subject-matter discloses a microbial consortium for degradation of dyes in wastewater treatment comprising at least a strain selected from the group consisting of:
- *Candida parapsilosis* HOMOGS20B strain with the deposit under the number 13163, from 19th June 2018, in CECT;
- *Yarrowia lipolytica* HOMOGST27AB strain with the deposit under the number 13164, from 19th June 2018, in CECT;
- *Candida pseudoglaebosa* LIIIS36B strain with the deposit under the number 13165, from 19th June 2018, in CECT; or mixtures thereof.

In an embodiment for better results, the microbial consortium comprises at least a strain selected from the group consisting of: said *Candida parapsilosis* HOMOGS20B strain, said *Yarrowia lipolytica* HOMOGST27AB strain and said *Candida pseudoglaebosa* LIIIS36B strain, or mixtures thereof.

In an embodiment for better results, the microbial consortium comprises *Candida parapsilosis* HOMOGS20B and *Candida pseudoglaebosa* LIIIS36B.

In an embodiment for better results, the microbial consortium comprises *Candida parapsilosis* HOMOGS20B and *Yarrowia lipolytica* HOMOGST27AB.

In an embodiment for better results, the microbial consortium comprises *Yarrowia lipolytica* HOMOGST27AB and *Candida pseudoglaebosa* LIIIS36B.

In an embodiment for better results, the microbial consortium comprises *Candida parapsilosis* HOMOGS20B, *Candida pseudoglaebosa* LIIIS36B and *Yarrowia lipolytica* HOMOGST27AB.

Another aspect of the present subject matter relates to a method of improving efficiency of treatment of wastewater for reduction of dyes therein comprising: preparing a microbial consortium capable of degrading dyes in wastewater, wherein microorganisms in the microbial consortium comprising at least a strain selected from the group consisting of:
- *Candida parapsilosis* HOMOGS20B strain with the deposit under the number 13163, from 19^{th} June 2018, in CECT;
- *Yarrowia lipolytica* HOMOGST27AB strain with the deposit under the number 13164, from 19^{th} June 2018, in CECT;
- *Candida pseudoglaebosa* LIIIS36B strain with the deposit under the number 13165, from 19^{th} June 2018, in CECT, or mixtures thereof;
and subjecting the microbial consortium to the dye-contaminated wastewater followed by addition of optimized nutrients to promote the dye removing.

The present subject-matter provides a process of isolation of wild yeasts from wastewater treatment plants, and subsequent screening (along with other 81 cheese isolates), for the ability of decolourising textile dyes was achieved with solid media.

Initially, forty six yeast strains isolated from two wastewater treatment plants along with other 81 cheese isolates were compared on their ability to decolourise several dyes, namely, Remazol Black B-A, Remazol Yellow RR, Levafix Blue CA, Levafix Red CA, Everzol Yellow, Sumifix Yellow, Sumifix Red, Everzol Red, Samofix Black, Navy Everzol ED, Sumifix Blue ESC, Sumifix Blue and Everzol Blue LED.

Six isolated strains were selected for their results and were further tested for dye decolourisation in liquid medium during 36 h. Dye decolourisation was evaluated by the analysis of colour in supernatants as well as in pellets for the evaluation of yeast cells adsorbed colour. In liquid conditions, the yeast strain *Candida pseudoglaebosa* LIIIS36B presented the best performance in the decolourisation for five dyes tested.

Furthermore, the yeast strain *Candida pseudoglaebosa* LIIIS36B exhibited a high efficiency of decolourisation in the case of two of the dyes tested (Levafix Red CA and Levafix Yellow CA). The observation of colourless yeast cells might unfold the existence of an underlying biodegradation mechanism.

In an embodiment, a modified Gompertz equation was used to model the decolourisation in liquid media; the estimated parameters, which all have biological attribution, allow us to assess quantitatively the decolourisation and a more accurate comparison between the different behaviours of the strains for each dye.

In an embodiment, molecular biology methodologies allowed the identification of the strains and the confirmation of the differences between the strains previous selected to liquid decolourisation based on classic methodologies, such as macro and microscopic colony and cell morphologies, assimilation tests (API ID 32C), growth curves in YM and NDM media and observation of growth in suspension.

Enzymatic activities of manganese peroxidase (MnP), azoreductase, oxireductase and laccase were also detected for the strain LIIIS36B. Phytotoxicity response for the decolourisation products of the strain LIIIS36B was also performed using the *Trifolium pratense* assay.

In an embodiment, the highest efficiency in dye decolourisation of those six strains were perform by *Candida parapsilosis* HOMOGS20B strain, *Yarrowia lipolytica* HOMOGST27AB strain, *Candida pseudoglaebosa* LIIIS36B strain.

Another aspect of the present disclosure is the use of a strain selected from the group consisting of:
- *Candida parapsilosis* HOMOGS20B strain with the deposit under the number 13163, from 19^{th} June 2018, in CECT;
- *Yarrowia lipolytica* HOMOGST27AB strain with the deposit under the number 13164, from 19^{th} June 2018, in CECT;
- *Candida pseudoglaebosa* LIIIS36B strain with the deposit under the number 13165, from 19^{th} June 2018, in CECT, or mixtures thereof;
as a dye degradation agent in wastewater treatment.

In an embodiment, as an attempt to understand the mechanism of decolourisation of the strains *Candida parapsilosis* HOMOGS20B, *Yarrowia lipolytica* HOMOGST27AB and *Candida pseudoglaebosa* LIIIS36B, spectral scanning and enzymatic activity assays were performed. It was possible to observe that, depending on the dye, decolourisation might be achieved through mechanisms of either adsorption or true degradation. The presence of extracellular ligninolytic manganese peroxidase was detected in strain LIIIS36B with an average of 2.30 -2.06 IU. L⁻¹; this enzymatic activity rarely demonstrated in yeasts might be related to the mechanism of true degradation as already proven for several filamentous fungi.

In an embodiment, another group of relevant industrial dyes were tested for verifying the strains capacity for decolourisation, according to the previous claim wherein the dye to remove is selected from a list consisting of: Red Procion HE 7B, Navy Procion HEXL, Yellow Procion HE 4R, Red Everacid N-2BL, Blue Supra Everdirect FFRL , Yellow Everacid MR HC, Blue Everacid N-AFN, Yellow Everdirect Supra RL, Basic Blue GRL-F 200% (Itocryl), Basic Yellow 200% (Itocryl) and Red Everdirect Supra BWS, mediated individually by *Candida parapsilosis* HOMOGS20B, *Yarrowia lipolytica* HOMOGST27AB and *Candida pseudoglaebosa* LIIIS36B and mixtures thereof.

In an embodiment, dye decolourisation assay was performed in NDM liquid medium (Normal Medium of Decolourisation) supplemented with 100 mg/L of each dye. Changes in the dyes colour were measured by spectral scanning. The strains exhibited different traits of decolourisation, which occurred through mechanisms of cell adsorption (colourful yeast cells pellet) or through true degradation, (the presence of colourless yeast cells pellet might unfold the existence of an underlying biodegradation mechanism), or through both processes, depending on the dye and the strain.

In an embodiment, the strain *Candida pseudoglaebosa* LIIIS36B exhibited the highest efficiency in decolourisation for almost the dyes tested in a period of time ranging between 12 - 36 h hours.

In an embodiment, strain LIIIS36B has revealed important traits which make it a promising strain for a yeast-based biological decolourisation process for synthetic dyes, namely its potential as part of future bioremediation strategies involving bio-augmentation.

In an embodiment, the three strains (HOMOGS20B, HOMOGST27AB and LIIIS36B) were able to produce considerable quantity of biomass in liquid medium for every dye tested.

In an embodiment, dye decolourisation was observed for all the dyes tested with the exception for Basic Yellow 200% (Itocryl) that none of the strains were able to remove the colour. Basic Blue GRL-F 200% (Itocryl) was the dye that only HOMOGS20B strain was able to grow and remove colour in solid medium. Moreover, in general, all the strains tested were able to remove colour from the solid medium. In liquid medium conditions, the same behaviour was achieved except for the Basic Blue GRL-F 200% (Itocryl) that only could be decolourised by the strain HOMOGST27AB (in 50 and 100 mg/L, 24-48 h).

In an embodiment, a method for obtaining and replicate *Candida parapsilosis* HOMOGS20B is described. Namely, by isolation and culture media: isolated colonies in Potato Dextrose Agar (PDA) petri plates at 30 °C for 48-72h. Storage: Up to 4 months at 4 °C in Potato Dextrose Agar slants previously grown at 30 °C for 48-72h or at -80 °C in cryopreservation vials with yeast cells grown in YEPD with 80% glycerol for long periods of time.

In an embodiment, a method for obtaining and replicate *Yarrowia lipolytica* HOMOGST27AB is described. Namely, isolation and culture media: isolated colonies in Potato Dextrose Agar (PDA) petri plates at 30 °C for 48-72h. Storage: Up to 4 months at 4 °C in Potato Dextrose Agar slants previously grown at 30 °C for 48-72h or at -80 °C in cryopreservation vials with yeast cells grown in YEPD with 80% glycerol for long periods of time.

In an embodiment, a method for obtaining and replicate *Candida pseudoglaebosa* LIIIS36B is described. Namely, isolation and culture media: isolated colonies in Potato Dextrose Agar (PDA) petri plates at 30 °C for 48-72h. Storage: Up to 4 months at 4 °C in Potato Dextrose Agar slants previously grown at 30 °C for 48-72h or at -80 °C in cryopreservation vials with yeast cells grown in YEPD with 80% glycerol for long periods of time.

Potato Dextrose agar (PDA) is comprised of 4.0 g potato extract, 20.0 g glucose and 15.0 g bacteriological agar dissolved in water to make up 1.0 L of medium. Yeast Extract Peptone Dextrose Broth (YEPD) is comprised of 10.0 g of yeast extract, 20.0 g of peptone, 20.0 g of dextrose dissolved in water to make up 1.0 L of medium.

For the dye decolourisation assays, selected yeasts strains named HOMOGS20B, HOMOGST27AB and LIIIS36B and the combinations between them (HOMOGS20B+LIIIS36B, HOMOGS20B+HOMOGST27AB, HOMOGST27AB+LIIIS36B and HOMOGS20B+HOMOGST27AB+LIIIS36B), were cultivated in NDM liquid medium supplemented with 100 mg/L of each dye, in a 24 well microplate incubated at 25 °C and 100 rpm for 36 h. After centrifugation (14 000 rpm/ 15') of 100 µL aliquots, the loss of colour of the supernatant was quantified by UV-visible absorbance measurements. Differences between the colour of cell's pellets were observed by naked eye.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

## Claims

1. A microbial consortium for degradation of dyes in wastewater treatment comprising at least a strain selected from the group consisting of:
- *Candida parapsilosis* HOMOGS20B strain with the deposit under the number 13163, from 19^{th} June 2018, in CECT;
- *Yarrowia lipolytica* HOMOGST27AB strain with the deposit under the number 13164, from 19^{th} June 2018, in CECT;
- *Candida pseudoglaebosa* LIIIS36B strain with the deposit under the number 13165, from 19^{th} June 2018, in CECT, or mixtures thereof.

2. The microbial consortium according to any of the previous claims, wherein the microbial consortium comprises *Candida parapsilosis* HOMOGS20B and *Candida pseudoglaebosa* LIIIS36B.

3. The microbial consortium according to any of the previous claims, wherein the microbial consortium comprises *Candida parapsilosis* HOMOGS20B and *Yarrowia lipolytica* HOMOGST27AB.

4. The microbial consortium according to any of the previous claims, wherein the microbial consortium comprises *Yarrowia lipolytica* HOMOGST27AB and *Candida pseudoglaebosa* LIIIS36B.

5. The microbial consortium according to any of the previous claims, wherein the microbial consortium comprises *Candida parapsilosis* HOMOGS20B, *Candida pseudoglaebosa* LIIIS36B and *Yarrowia lipolytica* HOMOGST27AB.

6. A method of improving efficiency of treatment of wastewater for reduction of dyes therein comprising:
preparing a microbial consortium capable of degrading dyes in wastewater, wherein microorganisms in the microbial consortium comprising at least a strain selected from the group consisting of:
- *Candida parapsilosis* HOMOGS20B strain with the deposit under the number 13163, from 19^{th} June 2018, in CECT;
- *Yarrowia lipolytica* HOMOGST27AB strain with the deposit under the number 13164, from 19^{th} June 2018, in CECT;
- *Candida pseudoglaebosa* LIIIS36B strain with the deposit under the number 13165, from 19^{th} June 2018, in CECT, or mixtures thereof;
and subjecting the microbial consortium to the dye-contaminated wastewater followed by addition of optimized nutrients to promote the dye removing.

7. The method according to the previous claim wherein the dye to remove is selected from a list consisting of: Remazol Black B-A, Remazol Yellow RR, Levafix Blue CA, Levafix Red CA, Everzol Yellow, Sumifix Yellow, Sumifix Red, Everzol Red, Samofix Black, Navy Everzol ED, Sumifix Blue ESC, Sumifix Blue, Everzol Blue LED, Red Procion HE 7B, Navy Procion HEXL, Yellow Procion HE4R, Red Everacid N-2BL, Blue Supra Everdirect FFRL , Yellow Everacid MR HC, Blue Everacid N-AFN, Yellow Everdirect Supra RL, Basic Yellow 200% (Itocryl), Red Everdirect Supra BWS and Basic Blue GRL-F 200% (Itocryl) mediated individually by *Candida parapsilosis* HOMOGS20B, *Yarrowia lipolytica* HOMOGST27AB, *Candida pseudoglaebosa* LIIIS36B or mixtures thereof.

8. The method according to any of the claims 6-7 wherein the wastewater is wastewater from textile industry, or printing industry, or paint industry.

9. The method according to any of the claims 6-8 wherein the amount of the selected strain is between 1-10% (v strain(s)/v wastewater).

10. The method according to any one of the claims 6-9 wherein the optimized nutrients are from a suitable nutrient providing extra carbon, nitrogen, phosphorus or a macro or micronutrient convenient for yeast growth.

11. The method according to any one of the claims 6-10 wherein the contact time between dye-contaminated wastewater and the selected strain varies between: 4-100h, preferably between 20-80 h.

12. The method according to any one of the claims 6-11 wherein the contact time between dye-contaminated wastewater and the selected strain(s) is between 12-72 h; preferably 24-48 h.

13. Use of a strain selected from the group consisting of:
- *Candida parapsilosis* HOMOGS20B strain with the deposit under the number 13163, from 19th June 2018, in CECT;
- *Yarrowia lipolytica* HOMOGST27AB strain with the deposit under the number 13164, from 19th June 2018, in CECT;
- *Candida pseudoglaebosa* LIIIS36B strain with the deposit under the number 13165, from 19th June 2018, in CECT or mixtures thereof,
as a dye degradation agent in wastewater treatment.
